# NEW EUROPEAN PATENT SPECIFICATION

(11) **EP 1 388 635 B2**
(45) Date of publication and mention of the opposition decision: **04.12.2013**
(45) Mention of the grant of the patent: 29.09.2010
(21) Application number: 03016395.0
(22) Date of filing: 21.07.2003
(51) Int. Cl.: E06B 3/88, E06B 7/23, B29C 63/04

(54) **Process for manufacturing of covering for dihedral shaped profiles and for rabbets of wings**
Verkleidungsverfahren für winkelförmige Profilierungen und Flügelfalzen
Procédé de revêtement de profilés dièdriques et de feuillures de battants

(30) Priority: 08.08.2002 IT TV20020098
(43) Date of publication of application: 11.02.2004
(73) Proprietor: Top Linea S.p.A., 31020 Sernaglia della Battaglia (TV) (IT)
(72) Inventor: Paulon, Franco, Treviso (IT)
(74) Representative: Dalla Rosa, Adriano

(56) References cited:
- DE-U1- 9 318 146
- DE-U1- 29 507 828
- DE-U1- 29 902 080

## Description

From DE 29902080 U1 is known a furniture front part for kitchens or bathrooms such as boards for furniture doors or drawers, constituted by a square or rectangular shaped plate made of chips and having thickened edges along three or four sides thereof, which are formed by an integral edge strip folded at their angles for constituting a frame, with the same length of the sides to be covered and the same thickness of the plate. In order to be able to fold the edge strip at the angles of the plate, the strip is provided with one or more V or W shaped grooves which, when the plate is applied along the sides of the plate, close themselves for forming a butt joint.

The present invention discloses a border strip and a coating process for cladding dihedron-shaped profiles of doors, in which the border strip is made in a manner different than that of the furniture front part disclosed by DE 29902080 U1.

Additional features and advantages of the present invention will become apparent from the detailed description which is given below of a particular embodiment thereof, illustrated by way of a not-limiting example with reference to the accompanying drawings, in which:

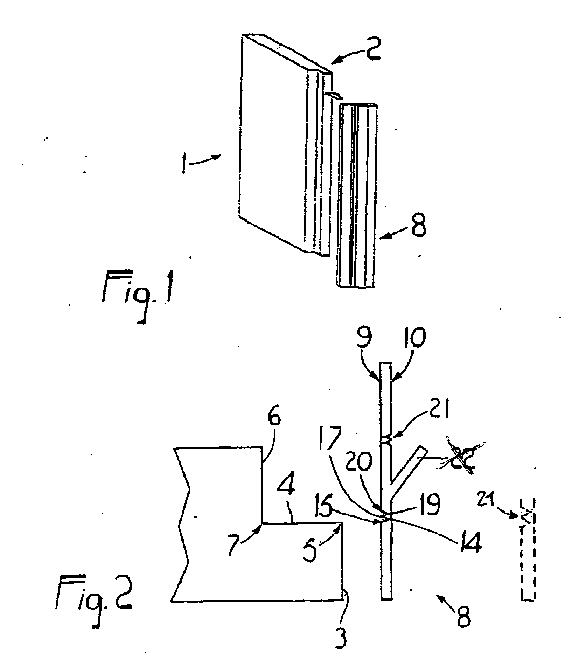

- Figure 1 is a perspective front view of a side edge, on which a dihedron-shaped profile has been obtained, and a border strip to be applied upon such dihedron-shaped profile;
- Figure 2 is a top view of a portion of the side piece, or wall, and the border strip in which two mutually opposing indentations, or even two not mutually opposing indentations, are cut longitudinally with a projection extending therebetween;

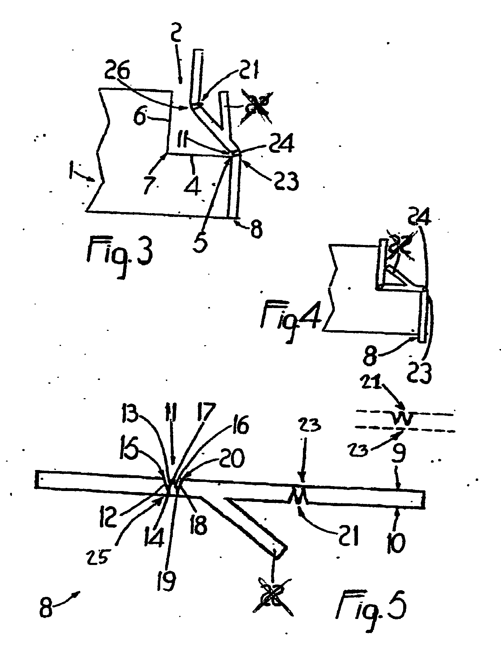

- Figures 3, 4 and 5 illustrate the steps of bending and applying the border strip upon the dihedron-shaped profile of the sidepiece or wall.

In the following examples of embodiment of the present invention, any individual feature that may be indicated in connection with any particular example being described, can actually be associated or interchanged with other different features existing in or being cited in connection with other examples of embodiment.

It should be further noticed that anything that may turn out as being already known in the art in the course of the patent granting procedure, should be intended as not being claimed and being subject to be disclaimed from the appended claims.

In the particular embodiment illustrated in the above mentioned Figures, the reference numeral 1 is used to indicate a wall or a side piece having an almost rectangular shape, when viewed from the front, to which a dihedron-shaped profile, as generally indicated at 2, has been applied or provided integrally.

Such a dihedron-shaped profile has a substantially rectilinear extension, features a roughly S-shaped conformation, when viewed from the top, and is therefore provided with a first planar surface 3 joined in an approximately orthogonal manner with a second planar surface 4, thereby defining a first corner or discontinuity 5 therebetween.

In turn, the second planar surface 4 joins with a third planar surface 6 arranged in an approximately parallel manner with respect to said first planar surface 3, and facing the opposite side with respect thereto, thereby defining a second corner or discontinuity 7 between said second planar surface 4 and said third surface 6.

Therefore, the process provides for obtaining a border strip, indicated generally at 8, having a substantially rectilinear extension and featuring a front surface 9, which faces said dihedron-shaped profile 2, and a back surface 10 facing the opposite side. At least a first indentation 11 is provided longitudinally in the front surface 9 of the border strip 8, said at least an indentation being in a cross-sectional shape of roughly a "V" or "W", thereby defining a first planar area 12 and a second planar area 13, which are roughly rectangular in their shape and lie on two planes inclined relative to each other.

Such first and second area, which are generally indicated at 12 and 13, respectively, join each other at a first vertex 14 pointing at the back surface 10.

The first planar area 12 has, on the opposite side with respect to said first vertex 14, a first end portion 15 joining with the front surface 9 of the border strip 8.

In turn, the second planar area 13 joins, again on the opposite side with respect to said first vertex 14, with a third planar area 16 lying approximately parallel to said first planar area 12, thereby defining a second vertex 17 between said second planar area 13 and said third planar area 16, this second vertex being situated almost at the same level as the front surface 9 of the border strip 8.

In turn, the third planar area 16 joins, on the opposite side with respect to said second vertex 17, with a fourth planar area 18 lying approximately parallel to the second planar area 13, thereby defining a third vertex 19 between said third and fourth area, as generally indicated at 16 and 18, respectively, in which said third vertex points at the back surface 10 of the border strip 8.

Similarly to the first planar area 12, the fourth planar area 18 further comprises a second end portion 20 joining with the front surface 9 of the border strip 8.

The border strip 8 itself may advantageously feature a second indentation 21, provided longitudinally in the back surface 10, or even in the front surface (see item shown with dashed lines in the Figures), at a pre-established distance from the first indentation 11 and with a substantially identical shape with respect thereto.

More precisely, the distance existing from said first indentation 11 to said second indentation 21 corresponds to the width of the second planar surface 4 of the dihedron-shaped profile 2.

At this point, the coating process calls for the border strip 8 to be heated up, if possibly required, in correspondence of said first indentation and, possibly, said second indentation, so as to confer greater localized flexibility to the same border strip 8, on the front surface 9 of which there is then provided the application of a proper adhesive or glue.

Thereupon, the border strip 8 is applied onto said planar surface 3 by positioning said first indentation 11 on top of the first corner 5 of the dihedron-shaped profile 2, so as to let the first end portion 15 of said first indentation 11 mate with said same first corner 5 in an almost precise manner.

The coating process calls then for the border strip 8 to be bent a first time in correspondence of said first corner 5, and possibly to be bent a second time in the opposite direction, so as to cause the second indentation 21 (if provided) to be positioned on top of the second corner 7 of the dihedron-shaped profile 2.

Such a second bending of the border strip 8 enables the latter to be also applied onto the second planar surface 4 and the third planar surface 6 of the dihedron-shaped profile 2.

The border strip 8 being so bent a first and a second time causes it to undergo two progressive local deformations taking place in correspondence of said first indentation and said second indentation.

As a result, the first indentation 11, similarly to the second indentation 21, undergoes a gradual narrowing effect, due to which, upon completion of the application of the border strip 8 upon the dihedron-shaped profile 2, said first planar area 12 comes practically to lie against said second planar area 13, while said third planar area 16 comes in turn to practically lie against said fourth planar area 18.

Furthermore, upon completion of the application of the border strip 8 onto the dihedron-shaped profile 2, the first end portion 15, the second vertex 17 and the second end portion 20 of the first indentation 11 turn out to be coinciding with each other in correspondence of said first corner 5.

Said first bending and said second bending of the border strip 8 bring about on the back surface 10, in correspondence of a first zone 23 lying opposite to the first indentation 11, a deformation due to material stretching, resulting in a curvilinear length 24 that has an approximately quarter-circumference contour.

Similarly, said first bending and said second bending of the border strip 8 bring about on the front surface 9, in correspondence of a second zone 25 lying opposite to the second indentation 21, a deformation due to material stretching, resulting in a second curvilinear length 26 facing said second corner 7.

It has therefore been demonstrated that the invention has actually reached the object and the purposes it was meant to achieve, through the provision of a method that really enables side edges of doors and similar parts to be coated in a process that turns out to be capable of being carried out in a particularly fast manner at particularly low costs. Such a method furthermore enables edge coatings to be provided, which are particularly resistant to mechanical stresses, as well as particularly appealing and valuable from a merely aesthetical point of view.

It shall of course be appreciated that the present invention is subject to a number of possible modifications and variants without departing from the scope of the same invention.

It shall be further appreciated that the materials used to manufacture the individual component parts of the present invention, as well as the shapes and the sizing thereof, may each time be selected so as to more appropriately meet the particular requirements or suit the particular application, again without departing from the scope of the present invention.

## Claims

1. Coating process for cladding dihedron-shaped profiles (2) of doors, which are applied on or provided integrally with a fixed wall or a side edge or flank (1) having an almost rectangular shape, said dihedron-shaped profile (2) having a substantially rectilinear extension and, when viewed from the top, featuring a roughly S-shaped conformation, and being therefore provided with a first planar surface (3) joined in an approximately orthogonal manner with a second planar surface (4), thereby defining a first corner or discontinuity (5) therebetween, and said second planar surface (4) being joined with a third planar surface (6) arranged in an approximately parallel manner with respect to said first planar surface (3) and facing the opposite side with respect thereto, thereby defining a second corner or discontinuity (7) between said second planar surface (4) and said third surface (6), **characterized in that** it comprises following steps in this or any other different sequence :
- providing a border strip (8) having a substantially rectilinear extension and featuring a first surface (9) facing said dihedron-shaped profile (2) and a second surface (10) facing the opposite side, a first indentation (11) having a roughly "V" or "W" shaped section being provided longitudinally in said first surface (9), and a second indentation (21) having in section the identical shape to said first indentation (11) being provided longitudinally in said second surface (10), which may or may not be opposed to said first surface (9), the distance existing from said first indentation (11) to said second indentation (21) corresponding to the width of said second planar surface (4) of the dihedron-shaped profile (2) ;
- heating up, if required, said border strip (8) where said two indentations (11, 21) are situated;
- applying an adhesive on the surface (9) of said border strip (8) arranged close to or on top of said dihedron-shaped profile (2);
- applying said border strip (8) onto said first planar surface (3), while positioning said first indentation (11) on top of said first corner (5), bending a first time the border strip (8) in correspondence of said first corner (5) and a second time in the opposite direction, so as to cause said second indentation (21) to be positioned on top of said second corner (7), by enabling the border strip (8) to be also applied onto said second planar surface (4) and said third planar surface (6).

2. Border strip (8) for cladding dihedron-shaped profiles (2) of doors, which are applied on or provided Integrally with a fixed wall or a side edge or flank (1) having an almost rectangular shape, said dihedron-shaped profile (2) having a substantially rectilinear extension and, when viewed from the top, featuring a roughly S-shaped conformation, and being therefore provided with a first planar surface (3) joined in an approximately orthogonal manner with a second planar surface (4), thereby defining a first corner or discontinuity (5) therebetween, and said second planar surface (4) being joined with a third planar surface (6) arranged in an approximately parallel manner with respect to said first planar surface (3) and facing the opposite side with respect thereto, thereby defining a second corner or discontinuity (7) between said second planar surface (4) and said third surface (6), **characterized in that** said border strip (8) has a substantially rectilinear extension and features a first surface (9) facing said dihedron-shaped profile (2) and a second surface (10) facing the opposite side, that a first indentation (11) having a roughly "V" or "W" shaped section is provided longitudinally in said first surface (9), and that a second indentation (21) having in section the identical shape to said first indentation (11) is provided longitudinally in said second surface (10), which may or may not be opposed to said first surface (9), the distance existing from said first indentation (11) to said second indentation (21) corresponding to the width of said second planar surface (4), onto said first surface (9) of the border strip (8) there being applied a proper adhesive, and the border strip (8) being applied onto said first planar surface (3) by positioning said first indentation (11) on top of said first corner (5), and by bending the border strip (8) a first time in correspondence of said first corner (5) and a second time in the opposite direction, so as to cause said second indentation (21) to be positioned on top of said second corner (7), and the border strip (8) to be applied also onto said second planar surface (4) and said third planar surface (6).

3. Border strip (8) according to claim 2, **characterized in that** said first and second indentation (11, 21) are shaped for defining a first planar area (12) and a second planar area (13), which are roughly rectangular in their shape and lie on two planes inclined relative to each other and join each other at a first vertex (14) pointing at said second surface (10), said first planar area (12) having, on the opposite side with respect to said first vertex (14), a first end portion (15) joining with said first surface (9) of the border strip (8), and said second planar area (13) being joined, on the opposite side with respect to said first vertex (14),with a third planar area (16) lying approximately parallel to said first planar area (12), thereby defining a second vertex (17) between said second planar area (13) and said third planar area (16), said second vertex (17) being situated at approximately the same level of the first surface (9) of the border strip (8), and said third planar area (16) being joined, on the opposite side with respect to said second vertex (17), with a fourth planar area (18) lying approximately parallel to said second planar area (13), thereby defining a third vertex (19) between said third planar area (16) and fourth planar area (18), in which said third vertex (19) points at the second surface (10) of the border strip (8), and said fourth planar area (18) comprises a second end portion (20) joining with said first surface (9).

## Patentansprüche

1. Aufbringverfahren zum Überziehen von winkelförmigen Profilen (2) von Türen, die angebracht oder integral mit einer festen Wand oder einem Seitenrand oder einer Flanke sind und eine im wesentlichen rechtwinklige Form haben, wobei das winkelförmige Profil (2) eine im wesentlichen geradlinige Erstreckung hat und von oben gesehen eine ungefähr S-förmige Ausbildung hat und daher mit einer ersten ebenen Fläche (3) versehen ist, die sich auf etwa senkrechte Weise mit einer zweiten ebenen Fläche (4) vereinigt, wodurch eine erste Ecke oder Unstetigkeit (5) dazwischen entsteht, und wobei die zweite ebene Fläche (4) sich mit einer dritten ebenen Fläche (6) verbindet, die in einer etwa parallelen Weise bezüglich der ersten ebenen Fläche (3) verläuft und der gegenüberliegenden Seite bezüglich dieser zugewandt ist, wodurch eine zweite Ecke oder Unstetigkeit (7) zwischen der zweiten ebenen Fläche (4) und der dritten Fläche (6) gebildet ist,
**dadurch gekennzeichnet,**
**dass** es die folgenden Schritte in dieser oder jeder anderen Reihenfolge aufweist:
- Bereitstellen eines Randstreifens (8), der eine im wesentlichen geradlinige Erstreckung hat und eine erste Fläche (9) aufweist, die dem winkelförmigen Profil (2) zugewandt ist, und eine zweite Fläche (10), die der entgegengesetzten Seite zugewandt ist, wobei eine erste Einbuchtung (11) mit einer im wesentlichen "V"- oder "W"-förmigen Querschnittsform in Längsrichtung der ersten Fläche vorgesehen ist, und wobei eine zweite Einbuchtung (21) mit einer zu der ersten Einbuchtung (11) identischen Querschnittsform in Längsrichtung in der zweiten Fläche (10) vorgesehen ist, die zu der ersten Fläche (9) entgegen gesetzt sein kann oder nicht, wobei der Abstand von der ersten Einbuchtung (11) zu der zweiten Einbuchtung (21) der Breite der zweiten ebenen Fläche (4) des winkelförmigen Profils (2) entspricht;
- Aufheizen, falls erforderlich, des Randstreifens (8), wo sich die zwei Einbuchtungen (11,21) befinden;
- Aufbringen eines Klebemittels auf die Fläche (9) des Randstreifens (8), der nahe zu oder auf dem winkelförmigen Profil (2) angeordnet ist;
- Aufbringen des Randstreifens (8) auf die erste ebene Fläche (3), während die erste Einbuchtung (11) auf der ersten Ecke (5) positioniert ist, ein erstes Biegen des Randstreifens (8) in Übereinstimmung mit der ersten Ecke (5) und ein zweites Mal in der entgegengesetzten Richtung, damit die zweite Einbuchtung (21) auf der zweiten Ecke (7) positioniert wird, wodurch der Randstreifen (8) auch auf die zweite ebene Fläche (4) und die dritte ebene Fläche (6) aufgebracht werden kann.

2. Randstreifen (8) zum Überziehen von winkelförmigen Profilen (2) von Türen, die angebracht oder integral mit einer festen Wand oder einem Seitenrand oder einer Flanke sind und eine im wesentlichen rechtwinklige Form haben, wobei das winkelförmige Profil (2) eine im wesentlichen geradlinige Erstreckung hat und von oben gesehen eine ungefähr S-förmige Ausbildung hat und daher mit einer ersten ebenen Fläche (3) versehen ist, die sich auf etwa senkrechte Weise mit einer zweiten ebenen Fläche (4) vereinigt, wodurch eine erste Ecke oder Unstetigkeit (5) dazwischen entsteht, und wobei die zweite ebene Fläche (4) sich jmit einer dritten ebenen Fläche (6) verbindet, die in einer etwa parallelen Weise bezüglich der ersten ebenen Fläche (3) verläuft und der gegenüberliegenden Seite bezüglich dieser zugewandt ist, wodurch eine zweite Ecke oder Unstetigkeit (7) zwischen der zweiten ebenen Fläche (4) und der dritten Fläche (6) gebildet ist,
**dadurch gekennzeichnet,**
**dass** der Randstreifen (8) eine im wesentlichen geradlinige Erstreckung hat und eine erste Fläche (9) aufweist, die dem winkelförmigen Profil (2) zugewandt ist, und eine zweite Fläche (10), die der entgegengesetzten Seite zugewandt ist, dass eine erste Einbuchtung (11) mit einer im wesentlichen "V"- oder "W"-förmigen Querschnittsform in Längsrichtung der ersten Fläche vorgesehen ist, und dass eine zweite Einbuchtung (21) mit einer zu der ersten Einbuchtung (11) identischen Querschnittsform in Längsrichtung in der zweiten Fläche (10) vorgesehen ist, die zu der ersten Fläche (9) entgegen gesetzt sein kann oder nicht, wobei der Abstand von der ersten Einbuchtung (11) zu der zweiten Einbuchtung (21) der Breite der zweiten ebenen Fläche (4) entspricht, wobei auf die erste Fläche (9) des Randstreifens (8) ein geeignetes Klebemittel aufgebracht wird und der Randstreifen (8) auf die erste ebene Fläche (3) aufgebracht wird durch Positionieren der ersten Einbuchtung auf der ersten Ecke (5) und durch Biegen des Randstreifens (8) ein erstes Mal in Übereinstimmung mit der ersten Ecke (5) und ein zweites Mal in der gegenüberliegenden Richtung, wodurch die zweite Einbuchtung (21) auf der zweiten Ecke (7) positioniert wird und der Randstreifen (8) auch auf die zweite ebene Fläche (4) und die dritte ebene Fläche (6) aufbringbar ist.

3. Randstreifen (8) nach Anspruch 2, **dadurch gekennzeichnet, dass** die erste und die zweite Einbuchtung (11, 21) so geformt sind, dass sie einen ersten ebenen Bereich (12) und einen zweiten ebenen Bereich (13) bilden, die etwa rechtwinklig in ihrer Form sind und in zwei Ebenen liegen, die zueinander geneigt sind und sich in einem ersten Scheitelpunkt (14) vereinigen, der zu der zweiten Flächen (10) gerichtet ist, wobei der erste ebene Bereich (12) an der gegenüberliegenden Seite bezüglich des ersten Scheitelpunkts (14) einen ersten Endabschnitt (15) hat, der sich mit der ersten Fläche (9) des Randstreifens (8) vereinigt, und wobei der zweite ebene Bereich (13) sich an der gegenüber liegenden Seite bezüglich des ersten Scheitelpunkts (14) mit einem dritten ebenen Bereich (16) vereinigt, der etwa parallel zu dem ersten ebenen Bereich (12) liegt, wodurch ein zweiter Scheitelunkt (17) zwischen dem zweiten ebenen Bereich (13) und dem dritten ebenen Bereich (16) gebildet ist, wobei der zweite Scheitelpunkt (17) etwa auf demselben Level der ersten Fläche (9) des Randstreifens liegt, und wobei der dritte ebene Bereich (16) an der gegenüberliegenden Seite bezüglich des zweiten Scheitelpunkts (17) sich mit einem vierten ebenen Bereich (18) vereinigt, der etwa parallel zu dem zweiten ebenen Bereich (13) liegt, wodurch ein dritter Scheitelpunkt (19) zwischen dem dritten ebenen Bereich (16) und dem vierten ebenen Bereich (18) gebildet ist, wobei der dritte Scheitelpunkt (19) auf die zweite Fläche (10) des Randstreifens (8) gerichtet ist und der vierte ebene Bereich (18) einen zweiten Endabschnitt (20) aufweist, der sich mit der ersten Fläche (9) vereinigt.

## Revendications

1. Procédé de revêtement pour habiller des profilés en forme de dièdre (2) de portes, qui sont appliqués sur ou fournis d'un seul tenant avec une paroi fixe ou avec un bord latéral ou avec un flanc latéral (1) ayant une forme presque rectangulaire, ledit profilé en forme de dièdre (2) comportant une extension essentiellement rectiligne et, lorsque l'on regarde depuis le dessus, **se caractérisant par** une conformation approximativement en forme de S, et étant par conséquent fourni avec une première surface plane (3) jointe d'une manière approximativement orthogonale à une deuxième surface plane (4), définissant de ce fait un premier coin ou une discontinuité (5) entre elles, et ladite deuxième surface plane (4) étant jointe à une troisième surface plane (6) agencée d'une manière approximativement parallèle par rapport à ladite première surface plane (3) et faisant face au côté opposé par rapport à celle-ci, définissant de ce fait un deuxième coin ou une discontinuité (7) entre ladite deuxième surface plane (4) et ladite troisième surface (6), **caractérisé en ce qu'**il comprend les étapes suivantes dans cet ordre ou dans n'importe quel autre ordre différent:
la fourniture d'une bande de bordure (8) comportant une extension essentiellement rectiligne et **se caractérisant par** une première surface (9) faisant face au dit profilé en forme de dièdre (2) et une deuxième surface (10) faisant face au côté opposé, fournissant longitudinalement dans ladite première surface (9) une première encoche (11) ayant une section approximativement en forme de "V" ou de "W", et une deuxième encoche (21) ayant en coupe la forme identique à ladite première encoche (11) prévue longitudinalement dans ladite deuxième surface (10), qui peut ou peut ne pas être opposée à ladite première surface (9), la distance existant entre ladite première encoche (11) et ladite deuxième encoche (21) correspondant à la largeur de ladite deuxième surface plane (4) du profil en
forme de dièdre (2) ;
le chauffage, si nécessaire, de ladite bande de bordure (8) où lesdites deux encoches (11, 21) sont situées ;
l'application d'un adhésif sur la surface (9) de ladite bande de bordure (8) agencée à proximité dudit profil en forme de dièdre (2) ou sur le dessus de celui-ci ;
l'application de ladite bande de bordure (8) sur ladite première surface plane (3), tout en positionnant ladite première encoche (11) sur le dessus dudit premier coin (5), le pliage une première fois de la bande de bordure (8) en correspondance avec ledit premier coin (5) et une deuxième fois dans la direction opposée, de manière à amener ladite deuxième encoche (21) à être positionnée sur le dessus dudit deuxième coin (7), en permettant à la bande de bordure (8) d'être également appliquée sur ladite deuxième surface plane (4) et sur ladite troisième surface plane (6).

2. Bande de bordure (8) pour habiller des profilés en forme de dièdre (2) de portes, qui sont appliqués sur ou fournis d'un seul tenant avec une paroi fixe ou avec un bord latéral ou avec un flanc (1) ayant une forme presque rectangulaire, ledit profilé en forme de dièdre (2) ayant une extension essentiellement rectiligne et, lorsqu'on regarde depuis le dessus, **se caractérisant par** une conformation approximativement en forme de S, et étant par conséquent fourni d'une première surface plane (3) jointe d'une manière approximativement orthogonale à une deuxième surface plane (4), définissant de ce fait un premier coin ou une discontinuité (5) entre elles, et ladite deuxième surface plane (4) étant jointe à une troisième surface plane (6) agencée d'une manière approximativement parallèle par rapport à ladite première surface plane (3) et faisant face au côté opposé par rapport à celle-ci, définissant de ce fait un deuxième coin ou une discontinuité (7) entre ladite deuxième surface plane (4) et ladite troisième surface (6), **caractérisée en ce que** ladite bande de bordure (8) a une extension essentiellement rectiligne et caractérise une première surface (9) faisant face au dit profilé en forme de dièdre (2) et une deuxième surface (10) faisant face au côté opposé, **en ce qu'**une première encoche (11) ayant une section approximativement en forme de "V" ou "W" est prévue longitudinalement dans ladite première surface (9), et **en ce qu'**une deuxième encoche (21) ayant en coupe la forme identique à ladite première encoche (11) est prévue longitudinalement dans ladite deuxième surface (10), qui peut ou peut ne pas être opposée à ladite première surface (9), la distance existant entre ladite première encoche (11) et ladite deuxième encoche (21) correspondant à la largeur de ladite deuxième surface plane (4), un adhésif approprié étant appliqué sur ladite première surface (9) de la bande de bordure (8) et la bande de bordure (8) étant appliquée sur ladite première surface plane (3) en positionnant ladite première encoche (11) sur le dessus dudit premier coin (5), et en pliant la bande de bordure (8) une première fois en correspondance avec ledit premier coin (5) et une deuxième fois dans la direction opposée, de manière à amener ladite deuxième encoche (21) à être positionnée sur le dessus dudit deuxième coin (7) et la bande de bordure (8) à être appliquée également sur ladite deuxième surface plane (4) et ladite troisième surface plane (6).

3. Bande de bordure (8) selon la revendication 2, **caractérisée en ce que** lesdites première et deuxième encoches (11, 21) sont formées pour définir une première zone plane (12) et une deuxième zone plane (13), qui sont approximativement rectangulaires quant à leur forme et qui se trouvent sur deux plans inclinés l'un par rapport à l'autre et qui se joignent l'un à l'autre au niveau d'un premier sommet (14) pointant vers ladite deuxième surface (10), ladite première zone plane (12) ayant, du côté opposé par rapport au dit premier sommet (14), une première partie d'extrémité (15) s'assemblant à ladite première surface (9) de la bande de bordure (8), et ladite deuxième zone plane (13) étant jointe, du côté opposé par rapport au dit premier sommet (14), à une troisième zone plane (16) qui est approximativement parallèle à ladite première zone plane (12), définissant de ce fait un deuxième sommet (17) entre ladite deuxième zone plane (13) et ladite troisième zone plane (16), ledit deuxième sommet (17) étant situé approximativement au même niveau que la première surface (9) de la bande de bordure (8), et ladite troisième zone plane (16) étant jointe, du côté opposé par rapport audit deuxième sommet (17), à une quatrième zone plane (18) qui est approximativement parallèle à ladite deuxième zone plane (13), définissant de ce fait un troisième sommet (19) entre ladite troisième zone plane (16) et la quatrième zone plane (18), dans laquelle ledit troisième sommet (19) pointe vers la deuxième surface (10) de la bande de bordure (8), et ladite quatrième zone plane (18) comprend une deuxième partie d'extrémité (20) s'assemblant à ladite première surface (9).
